# EUROPEAN PATENT APPLICATION

(11) **EP 1 689 184 A2**
(43) Date of publication of application: **09.08.2006**
(21) Application number: 05027296.2
(22) Date of filing: 14.12.2005
(51) Int. Cl.: H04N 7/173

(54) **Method and system enabling web content searching from a remote set-top control interface or device**

(30) Priority: 20.12.2004 US 17349
(71) Applicant: Alcatel, 75008 Paris (FR)
(72) Inventor: Golla, Prasad N., Plano, TX 75075 (US)
(74) Representative: Schäfer, Wolfgang

(57) **Abstract**

A system for conducting a data search operation for content stored at nodes on a network includes a menu interface for enabling an interaction sequence of content category selection and definition-narrowing of those categories selected, a server application for interpreting the interaction sequence and for formulating a search query based on the interpretation, and a session application for submitting the query to a third party node, and for receiving and filtering results returned, the results forwarded to the menu interface for subsequent display and interaction. The network may combine wireless and land-based telephone, Internet, cable and satellite television.

## Description

### Field of the Invention

The present invention is in the field of Internet, cable, and communication network services and pertains particularly to methods and apparatus for searching multimedia content from TV remote set-top system interfaces in the local box, Internet, communication, and network provider databases.

### Background of the Invention

Network services provided for enabling individual consumers to access to Internet networks have largely been limited, until fairly recent times, to personal computers (PC) adapted by software and hardware to access the Internet through a dial-up connection using telephone lines and an Internet service provider (ISP) to broker the connection.

As network technologies and peripheral computing devices have been further developed, a range of products and services have become available for enabling Internet access and network navigation in non-PC environments. Of these, examples include network access-capable cellular telephones, personal digital assistants (PDA), and more recently developed Web-enabled television systems.

Web-enabled television systems are available now that leverage high-speed digital networks adapted to carry digital cable network and satellite network programming and pay-per-view services to consumers. Hi-definition digital television (HDTV) is just one non-PC product capable of receiving and displaying digital content. Digital television services are provided alongside Internet access services through a single system. For example, a set-top box remote control may be used to activate Internet access services while viewing digital television programming. Access to electronic mail, Web-navigation, and Web searching are possible using a combination of remote control function and application of other input devices like the traditional keyboard.

A problem with existing art is that in non-PC environments, Web-based services and digital television services are not well integrated. Query-based Internet search interfaces for traditional Web-navigation software installed on a set-top television box requires much input from a consumer in order to access and then navigate through returned search results provided as a list of a few tens to many hundreds of hyper links from which a consumer may select and activate to view content. An input peripheral like a functional keyboard may still be required to navigate the search interfaces and retuned search results. Cable and satellite services may enable channel navigation from a remote control device only for their own programming channels. Moreover, popular searches for media specific content like movie clips or full presentations or images still may return many hundreds of links, which must be waded through before content may be accessed.

Further to the above, the Internet is merging with the traditional telephone and cable networks. The traditional telephone line, both land based and wireless, have been carrying Internet based traffic for sometime now. This trend will further continue with almost complete blurring of the networks; Internet, telephone, and television. In such a scenario, the viewer at a television can obtain content on the "Web" (which is now a combination of the Internet, telephone, and television networks) by use of a remote set-top box controller seamlessly. The television set will become a multimedia playing device with music, photographs, traditional web content, movies, etc., and the need to browse for content on this 'combined network' through an easy interface is the topic of this invention.

What is clearly needed is a system and method for enabling a smart search capability from a simple remote control interface using existing remote indicia.

### Summary of the Invention

A system is provided for conducting a data search operation for content stored on an Internet network from a cable or satellite network terminal menu. The system in some embodiments may include a menu interface for enabling an interaction sequence of content category selection and definition narrowing of those categories selected, a server application for interpreting the interaction sequence and for formulating a search query based on the interpretation; and a session application for submitting the query to a third party node, and for receiving and filtering results returned, the results forwarded to the menu interface for subsequent display and interaction.

In one embodiment, the content searched may include video, audio, or image content. Also in a an embodiment, the terminal may be a cable television or a set-top box, the menu controlled via a remote control device. Also in one embodiment, the third party node may be a link server hosted by a network data search engine and service provider. In another embodiment, a third party node may be a content server hosted by a content service provider. In this latter embodiment, the provider information regarding service integration may be provided with returned results.

According to another aspect of the present invention, a method for searching the Internet for content from a cable or satellite television terminal is provided. The method in one embodiment includes steps for (a) in an interactive content menu accessible from the terminal, selecting a content category from more than one offered category, (b) repeating content category selection one or more times from subsequent content menu screens resulting from previous selections, (d) formulating a search query based on data describing the content selection sequence, (e) submitting the search query to one or more search engines, (f) receiving results from the one or more search engines, (g) optimizing the received results against a set of rules; and (h) forwarding the optimized results to the television terminal for display and further interaction in a subsequent menu screen.

In one embodiment, in step (a), selection is performed using the scroll and enter indicia of a remote control device. In this embodiment, in step (b), each subsequent category more narrowly defines content selected. Also in one embodiment, in step (d), the query may be formed according to rules associated with third party criteria for query execution in a search engine.

In another embodiment, in step (f), the one or more search engines may return results in the form of hyperlinks. In a variation to this embodiment, in step (f), at least one of the search engines may be local to the terminal and searches local stores for selected content.

In another embodiment, in step (g), optimizing may include completing the URL path to the content rendering the URL assertable to initiate content streaming or download and display. In this embodiment, in step (g), optimizing may include filtering results to eliminate duplicate hyperlinks. Also in this embodiment, in step (h), the results may include additional information about service subscription to the provider of the content. In all aspects, in step (g) the results may be universal resource locators assertable to stream or download content.

According to yet another aspect of the present invention, a filtering application is provided for optimizing universal resource locators returned from a search engine. The application includes a first portion for eliminating duplicate universal resource locators that point to a same content resource, a second portion for eliminating universal resource locators that are not relevant to a certain degree to searched subject matter, and a third portion for appending network path information to the universal resource locators to enable invocation of the links for initiating streaming of or download and display of the associated content.

In one embodiment the filtering application may be used in a proxy content search operation initiated from a cable or satellite television terminal using a remote control device. Also in one embodiment, the portion of the network path appended to a universal resource locator may be derived manually by viewing source code data associated with the information page containing the final path to the stored content. Further in one embodiment the final path information may be appended by automated process based on knowledge of the stored location of the content.

### Brief Description of the Drawing Fiaures

Fig. 1 is an architectural overview of a network adapted for content searching according to an embodiment of the present invention.

Fig. 2 is a block diagram illustrating components of an intelligent search link server according to an embodiment of the present invention.

Fig. 3 is an architectural overview illustrating possible locations for distributed server components according to an embodiment of the present invention.

Fig. 4 is a block diagram illustrating an example of a consumer menu pattern according to an embodiment of the present invention.

Fig. 5 is a block diagram illustrating intelligent search link server function according to an embodiment of the present invention.

Fig. 6 is a block diagram illustrating smart link population into a remote program menu according to an embodiment of the present invention.

### Description of the Preferred Embodiments

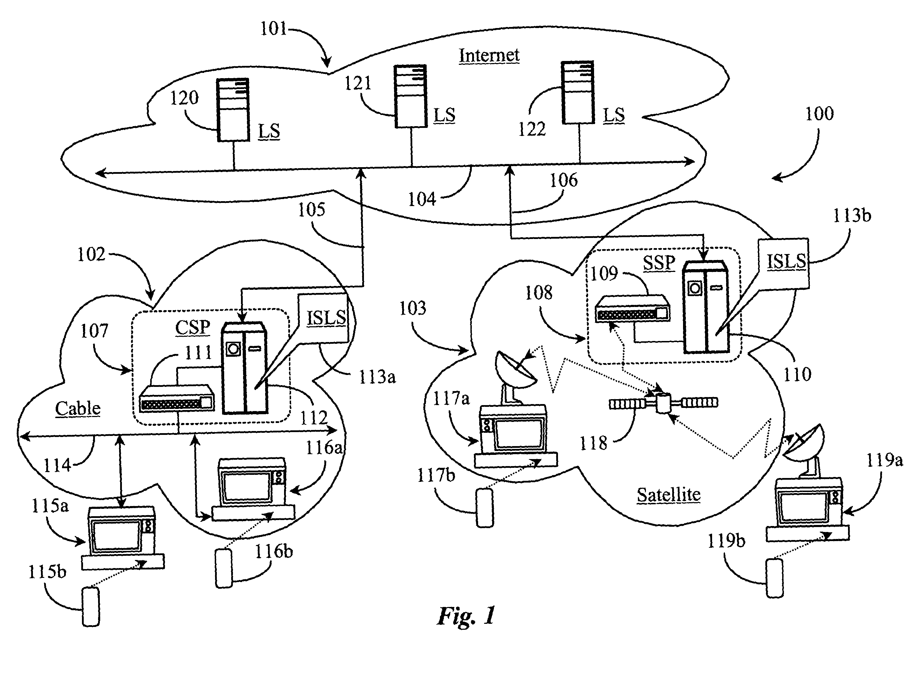

Fig. 1 is an architectural overview of a network 100 adapted for content searching according to an embodiment of the present invention. Network 100 includes an Internet network 101, a cable network 102, and a satellite network 103. Internet network 101 has an Internet backbone 104 illustrated therein. Backbone 104 logically represents all of the lines, access points, and network equipment that make up the Internet network as a whole. Therefore, there are no geographic limitations to the practice of the present invention except where geographic limitations exist in connected networks, which shall only apply to those networks.

A plurality of link servers (LS) is illustrated within Internet network 101. These are LS 120, LS 121, and LS 122. In one embodiment, LS 120-122 may be servers that provide universal resource locator (URL) links to search engine interfaces operated as client software applications on nodes having connection to Internet network 101, more specifically to backbone 104. LS 120-122 may be hosted by one or more than one enterprise that may provide Internet search services to consumers. In the just-mentioned embodiment, LS 120-122 may all be hosted by a single enterprise, or each may be hosted by a separate competing enterprise. Yahoo™, Google™, and Altavista™, represent well-known examples in this embodiment, of enterprises that may host and maintain LS 120-122.

In another embodiment, LS 120-122 may be servers operated by any third-party enterprise adapted to provide content to consumers. In this case, links themselves may comprise complete network paths to downloadable and, or streaming media content.

In typical application where a LS host is a search engine provider, LS 120, for example, may serve a list of URL results to a Web-browser-based search engine interface (client) after having received a search query from the client and after having used the submitted query as a base for returning the URL results. The URLs may be obtained from vast databases containing such URL entries that are aggregated and maintained by the service provider. When a client, typically an Internet-connected PC, uses the search engine client and submits a query, eventually the search engine service provider returns a list of links to the client interface.

Cable network 102 is, in this embodiment, connected to and has access to Internet-based content. Cable network 102 has a cable network backbone 114 illustrated therein that represents all of the cabling and connection points that make up network 102 as a whole. A cable service provider CSP 107 is illustrated within cable network 102 and represents an enterprise adapted to provide cable-programming services to subscribers. CSP 107 has service equipment 111 provided therein and representative of all of the cable equipment required for delivering cable network programming to viewers. Equipment 111 has connection to cable backbone 114 to facilitate content delivery.

A plurality of consumer stations is illustrated as having connection to cable backbone 114 for receiving cable programming from CSP 107. These are consumer station 115a and consumer station 116a. Consumer stations 115a and 116a are assumed to be television sets in this example and have respective cable set-top boxes associated therewith, which enable the stations to initiate cable programming subscription and subsequently to receive delivered content from CSP 107. Consumer station 115a, including the illustrated set-top cable box component may be operated using a set-top remote control device 115b. Likewise, consumer station 116a, including the illustrated set-top cable box component may be operated using a set-top box remote control unit 116b.

CSP 107 includes an intelligent search link server (ISLS) 112 as a novel component thereof, which is adapted according to a preferred embodiment, to provide URLs of Web-based content for integration thereof into cable menus accessible to consumer stations 115a and 116a through remote control devices 155b and 116b respectively.

Server 112 has an ISLS server application 113a installed thereon, which is adapted to enable searching of Web-based content from the points of stations 115a and 116a using respective remotes 115b and 116b wherein the search results, namely URLs, are provided smartly to the respective stations 115a and 116a for integration with and display on their respective program guides. Server 112 has access to Internet backbone 104 through an Internet access line 105 and therefore has Internet access to LS 120-122. Consumer stations 115a and 116a have cable access to content from server 112 through cable backbone 114 and cable provider equipment 111.

Satellite network 103 is, in this embodiment, connected to and has access to Internet-based content. Network 103 has a satellite service provider (SSP) 108 illustrated therein and adapted to provide satellite network programming to subscribers. SSP 108 has service provider equipment 109 illustrated therein, which represents all of the equipment required in order to deliver program services via at least one satellite, illustrated herein as satellite 118 to consumers.

A plurality of consumer stations is illustrated as having satellite connection to SSP 108. These are a consumer station 117a and a consumer station 119a. Consumer stations 117a and 119a are assumed in this example to be adapted to receive satellite network programming by way of associated equipment, namely a set-top box and satellite receiver dish. Each consumer station may be controlled via a set-top box remote control device. A remote control device 117b is operable for station 117a and a remote control device 119b is operable for station 119a. Basic interaction between provider 108 and consumers 117a and 119a is very similar to that described within cable network 102 except that the method of carrying the signal is satellite communication instead of physical cabling associated with network 102.

SSP 108 includes an ISLS 110, which is adapted in a similar fashion as that described above with respect to ISLS 112 within CSP 107. Server 110 has an ISLS application 113b installed thereon, which is analogous to ISLS 113a installed on server 112. Consumers operating at stations 117a and 119a may use their respective remote control devices 117b and 119b to initiate a content search whereupon Web-based content may be searched according to consumer input and wherein returned results in the form of URL hyperlinks may be filtered smartly at server 110 using software 133b and subsequently delivered to the appropriate consumer stations 117a and 119a whereupon such results may be displayed within respective satellite program menus.

In this embodiment, severs 112 and 110 are centralized proxy servers running ISLS software instances 113a and 113b respectively for the purpose of integrating Web-results (URLs) into the normal programming information for access using the respective remotes 1176b and 119b. However, in other embodiments, ISLS 113a and 113b may comprise a plurality of distributed software components including a client application for consumer stations, a provider application for provider locations, and perhaps a client application distributed to search service providers without departing from the spirit and scope of the present invention. The inventor illustrates the present centralized implementation for explanatory purposes only.

In one embodiment, service provision may be centralized at one location in the broader network using video-enabled Internet service, such as digital service line (DSL), Internet cable modem etc. In this embodiment, the separate carrier networks, including wired or wireless satellite, telephone, Internet, and cable are, for the purpose of the present invention, considered one physical network wherein the multimedia service provider may be reached from all CPE stations capable of video-enabled Internet service access. In this case, backbones 104, 118, and 114 including any other carrier networks may be logically blurred and considered one seamless network.

ISLS has two main functions with regard to performing content searches that may be initiated and advanced using a remote control device. Firstly, ISLS 113a-b quantifies and derives a meaning from a series of user menu selections (clicks) made while the menu is displayed and using the appropriate remote control device scroll arrows and select button provided on the device and adapted for the purpose. Therefore, if device 119b is used to traverse a particular menu or menus containing selection options, ISLS records and interprets those selections and converts the defined aggregate into a useable search engine query that may be used to return search provider or third party provided hyperlinks display.

Secondly, ISLS may process hyperlinks returned from a search service provider, for example, in order to streamline and optimize the results so that they may be dynamically appropriated to the menu display in a fashion as to enable incorporation or invocation of those links to order or otherwise retrieve the Web content pointed to and defined by those links. Result optimization may include but is not limited to negation of results or hyperlinks that do not enable complete access to the media content. Likewise, duplicate hyperlinks, which may point to a same content, may be resolved during result optimization. Eventually during processing, only a handful of the most relevant hyperlinks would be provided and inserted dynamically into the cable or satellite program guide for selection.

In one preferred embodiment, local content searches may be performed first before any query is constructed for submission to any Internet-based service provider. The likely content that would be allowed for any content search using a remote control device may be broadly defined as video content, audio content, image content, and in some cases, electronic information files or Hypertext Markup Language (HTML) files typically available to PC users.

In practice of the present invention, a consumer operating a remote control device, such as device 115b associated with station 115a may initiate a content search by navigating, using an indicia provided on device 115b to display a starting menu or starting point in a displayed menu. Such a starting menu may contain selectable topics linearly disposed for easy navigation such as in a vertical column. The start menu may be provided as a default starting point for the interaction. The broad starting titles may comprise video, audio, images, each of which is separately selectable using the arrow and selection buttons already existing on device 115b. In one extended embodiment, the title information may be added if HTML pages are included in the allowable search content.

If the consumer navigates to and selects "video" for example, a category grouping may appear to enable continuance of the interaction. For example, the titles in this grouping, which may also be vertically disposed, might read movies, movie trailers, news clips, and sports. The ISLS server "knows" that whatever category is selected next the content links to be retuned are limited to provision of video content. If the consumer navigates the list and selects movie trailers, the next category of titles may include actor/actress, movie title, top 5, and back. It is noted herein that all categories appearing may include an option for canceling the content search and/or for navigating back to the start menu.

If the consumer navigates to and selects top 5, a content search may be triggered. ISLS has recorded and interpreted the selections of the interaction to help it formulate the instruction needed to perform the search. What is known about the interaction of this example is that the consumer is looking for the top 5 movie trailers that may exist. The meaning of "top" in top 5 may be understood by the system by default rule as "current movies bringing in the most revenue at the box office". Therefore a constructed search query (submitted by proxy) may be formulated somewhat like movies+ now playing+ top 5+ trailers. It is important to note herein that different search engine services have varying input rules for conducting searches, including varying text input for refining searches and searching by specific categorical constraints including video, audio, and images.

It is well known in the art that traditional search results returned for a search conducted for video, audio or other content using a traditional PC-based search interface may not define complete URL links that may be used to invoke the associated media. ISLS may, in one embodiment, be adapted to append a last portion of a network path required to invoke the associated media from a remote control device, in effect creating a shortcut to the associated media. In one embodiment, search provider hosts may cooperate by simply maintaining links that are invoke-able to immediately initiate downloading or streaming of the media from the remote control device. Therefore, ISLS may include provided navigation rules that correspond with rules and capabilities of a cooperating search service provider that mitigate navigational obstacles that may otherwise inhibit efficiency of using a remote to select and invoke results. These rules may enable provision of *optimized hyperlinks* that may also be renamed with simple titles for inclusion into a cable or satellite-programming guide instead of displaying full navigation paths.

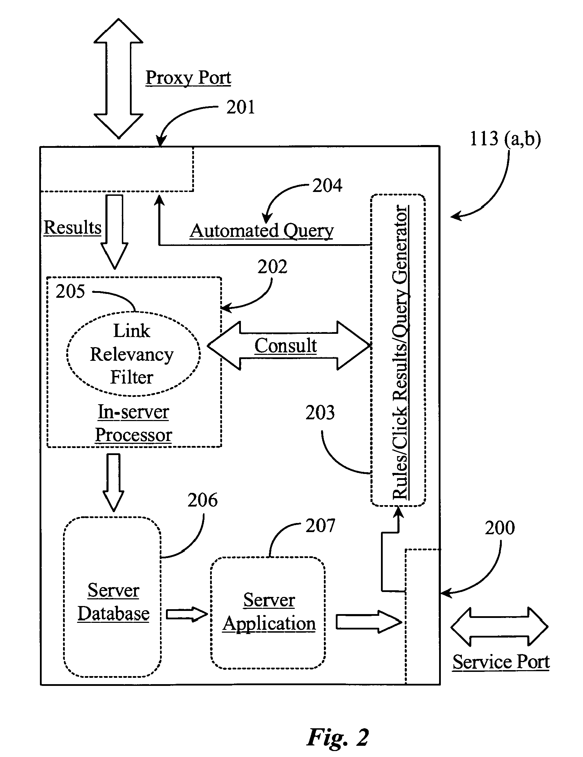

Fig. 2 is a block diagram illustrating components of ISLS 113 of Fig. 1 according to an embodiment of the present invention. ISLS 113 (a,b) as previously described above may be distributed over several hosts instead of residing in one host without departing from the spirit and scope of the present invention. The example of ISLS 113 illustrated on a single host is meant to be logical only and may be considered as one possible implementation of several possible implementations.

ISLS 113 has a service port 200 illustrated therein and adapted with all of the required circuitry and memory components to enable bi-directional data communication with programming provider equipment responsible for delivering cable and/or satellite programming to consumers. One service port 200 is illustrated in this example however there may be more than one port without departing from the spirit and scope of the present invention.

ISLS has a proxy port 201 illustrated therein and adapted with all of the required circuitry and memory components to enable bi-directional network communication between server 113 and any third party network-based serve analogous to LS 120-122 described with reference to Fig. 1. In practice of the present invention, local interaction by consumers at their respective consumer stations that may result in one or more necessary search operations are submitted to ISLS 113 through port 200 for analysis.

ISLS has a processing component 203 provided therein and adapted to analyze incoming requests for information relevant to a consumer's local interaction or "click results" made using a remote control device analogous to device 115b, for example, of Fig. 1. The click results contain all of the information required by the processor to formulate a search query using an automated query generator. System rules may also be locally accessible to processor 203.

For each active consumer, an automated query 204 is generated and submitted to proxy port 201. The query may be configured according to third-party preferences for submitting search queries, those preferences contained in rules accessible by processor 203. Each generated query is submitted to one or more third-party servers, in this case, over the Internet network through port 201. Each query is identified to a specific consumer through consumer ID parameters, which may include a unique consumer station or CPE identification number. In some cases the identification may be a telephone number and zip code pair, or some other unique parameter.

The search service node or link server (LS) receives the queries and returns the search results based on the queries received. In one embodiment, the resulting hyperlinks returned may already be optimized to provide full media paths to the associated media selections. In this case, a cooperating search service provider may have a database adapted to contain only links, which provide full media paths or "shortcuts" to the media. In this embodiment, the links may be manually appended as part of database maintenance.

In one embodiment, an ISLS component adapter (not illustrated) may be provided to run at a third-party location and may be adapted to append links with the required URL information for directly invoking the media associated with the link. This information is readily available by accessing HTML source data for each URL. The source data defines the media that is embedded in the information page of the URL.

In one embodiment, URL results returned from third-party servers are fed into an in-server processor 202 running an instance of link relevancy filter 205. Link relevancy filter 205 may be adapted according to one embodiment to apply URL information required to make links fully invoke able with respect to associated media instead of performing this process at third-party service nodes. In addition, filter 205 may be adapted to ignore certain returned links, which may be duplicate links or multiple links that point to a same media item. Otherwise, many other links may be eliminated from search results if those links do not comply with existing enterprise rules for forwarding to consumers. In-server processor 202 may consult with a rules base for each returned link that is associated to each query processed.

It is important to note herein that components of ISLS may also be provided to program provider equipment and at consumer locations in order to verify that content searched is not stored locally at a consumer station or already available at the program providers premise. In a preferred embodiment, ISLS 113 receives and processes returned results by relevancy and against a set of rules in order to narrow the quantity results forwarded to consumers down to a handful of most relevant links.

Many Web-based media services already have Web-based video channels and audio stations that may be accessed for streaming media content. These services may advertise their content by making it available through an ISLS content search interaction consumer-by-consumer. If the content is rich and popular, further integration can be achieved like enabling consumers to incorporate these Web-based services by subscription modification or one-time purchase through the programming provided acting as a service broker much in the same way existing Internet services are brokered.

In one embodiment, links that are kept for forwarding to consumers are deposited in a server database 206 adapted to contain the links for a pre-determined period of time. In this way, future searches by consumers may be quickly handled if the search involves results previously delivered. Database 206 then may be searched for relevant links before queries are constructed for network submission.

ISLS has a server application 207 provided therein and adapted to serve the most relevant hyperlinks back to consumers through service port 200 and the appropriate programming providers. One ISLS server may be configured to work with more than one cable or satellite-programming provider without departing from the spirit and scope of the present invention.

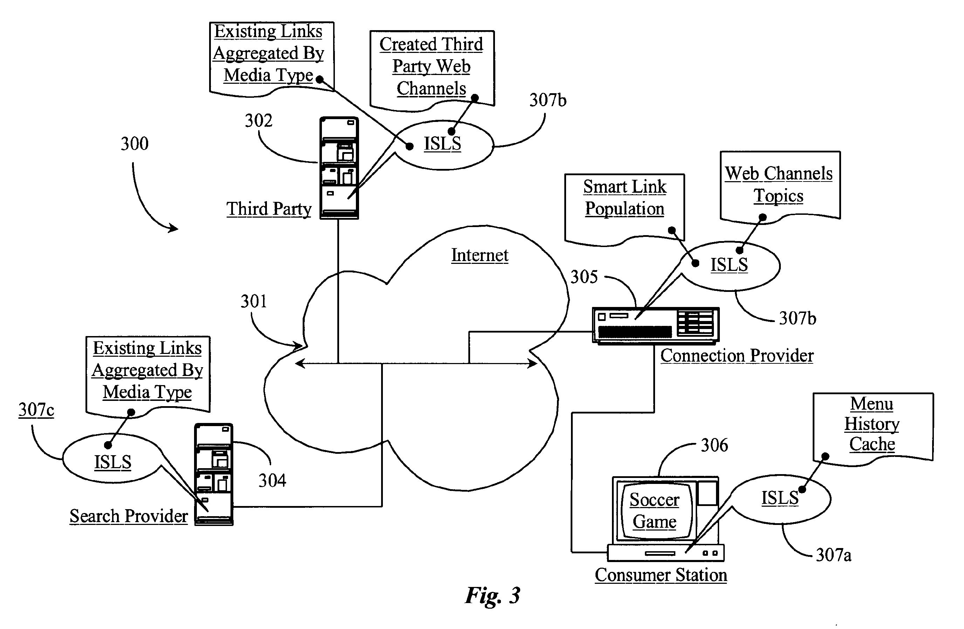

Fig. 3 is an architectural overview 300 illustrating possible locations for distributed ISLS components according to an embodiment of the present invention. As previously described above, ISLS may be a distributed system of cooperating components without departing from the spirit and scope of the present invention. In this example, a search provider 304 and a third party node 302 are illustrated having connection to an Internet network 301. Servers 304 and 302 are analogous to LS 120-122 described with reference to Fig. 1.

Search provider 304 may have an ISLS application 307c provided thereto and adapted for aggregating existing links by media type associated. Application 307c may also include the capability of optimizing URLs that would otherwise simply define Web pages containing embedded media or links to media. As previously described, optimization may include modifying those links to include the network paths directly to the media so that invoking the link initiates download or streaming of the associated media content. Therefore, a URL that contains more than one media offering may be broken up into several URLs, one for each media offering.

Third party server 302 may contain an ISLS application 307b adapted to aggregate existing links and provide them by media category and to create and maintain third party Web channels that may provide media content by schedule. In this regard, a media offering like a movie or music album offered through a subscribe able video channel or music channel can be provided to a consumer along with subscriber information such as in a pay-per-view model. In this case, a consumer may add the Web-based channel directly to his or her cable-programming guide or the like and may be charged accordingly through his or her cable provider.

Connection provider 305 may have an ISLS application 307b provided thereto and adapted to populate a consumer's most relevant links into a navigable menu list. In one embodiment, a consumer menu listing the most relevant selections may be integrated with selections provided locally or through normal cable programming. An additional menu list item may be reserved as well for enabling the consumer to navigate to a next group of results returned. For example, a list of 5 hyperlinks may appear in the menu with a space reserved for calling in the next 5 links.

ISLS 307b may also include links that include Web-channels aggregated by topic wherein those channels may include scheduled programming and content information, which may be dynamically populated into the cable programming interactive guide alongside generic programming. More detail about programming information integration will be provided below.

A consumer station 306 is illustrated in this example and is analogous to those described with reference to Fig. 1. Station 306 may have a client ISLS application 307a provided thereto and adapted, among other things, for keeping a consumer's search history, maintaining a search results cache. Additionally, application 307a may provide a programming extension adapted to provide the integration of typical cable programming information and Web-sourced content programming information into the same interactive user menu or guide.

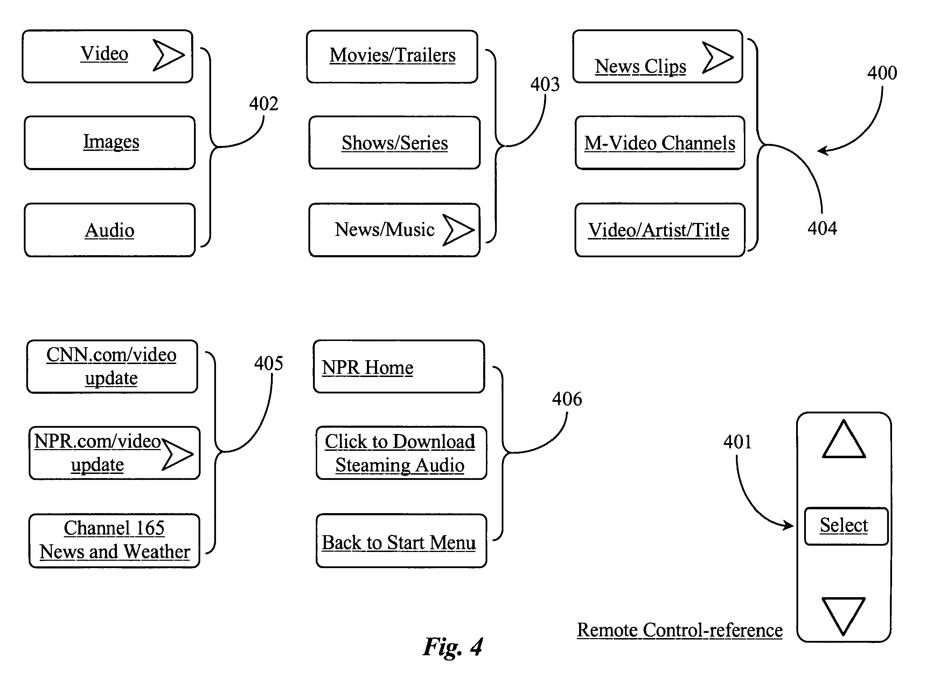

Fig. 4 is a block diagram 400 illustrating an example of a consumer menu pattern for initiating a content search according to one embodiment of the present invention. Diagram 400 illustrates a content-search starting menu 402. The cable or satellite programmer may provide menu 402 as a generic menu item accessible using a remote control device. The topics for this starting menu are purposefully broad such as Video, Images, and Audio content. A consumer may highlight and select any of these provided options to continue. A remote control reference 401 is illustrated in this example and represents the minimum controls that may be required in menu navigation according to this embodiment. The directional and selection or enter buttons are controls that are already present on a typical remote control device.

In this example, the consumer selects the broad category of video. The action causes a next option menu 403 to appear. This menu is narrower in topic than the last menu providing a drill-down to more specific content. Menu 403 lists, from top to bottom, movies/trailers, shows/series, and news/music. The common theme of menu 403 is that all available options define video content selected menu 402.

In this example, the consumer selects news/music causing a next menu 404 to appear containing news or music video options. Thus far, menus 402-404 are relative static menus generic to the program guide. In menu 404, the options are news clips, music video channels, and video by artist or title. In this example, the consumer chooses news clips. At this point, all local sources may be searched for video + news/music + news clips before any network search is initiated. If any local content is found then it may be provided in a next menu for consideration.

In this example, no local content is found so an Internet search is performed according to the query. After query submission by proxy and after the most relevant links are isolated and optimized, a dynamic results menu 405 may appear. Menu 405 is not entirely dynamic because of one option that is a static part of the programming service, channel 165-news and weather, which may already be part of the consumer's current viewing guide. However, CNN.com/audio update and NPR.com/audio update are dynamic, optimized links defining Internet-sourced content.

In this example, the consumer highlights and selects NPR.com/audio update resulting in the appearance of a next dynamic menu 406. Menu 406 includes a link to NPR home, a link back to the start menu 402, and a link, which invokes the automatic streaming of NPR audio update into the consumers receiving and display equipment. In one embodiment, menus 405 and 406 may be combined in a single menu wherein one click of NPR.com/audio update initiates connection to and download or streaming of the content.

It is noted herein that there may be more than 3 list items for each menu without departing from the spirit and scope of the present invention. For example, at menu 404, had the consumer selected video/artist/title, a next menu may have appeared listing numerous possible titles and artist names for the consumer to select from. Such a menu might contain tens to hundreds of titles and/or artist names to choose from.

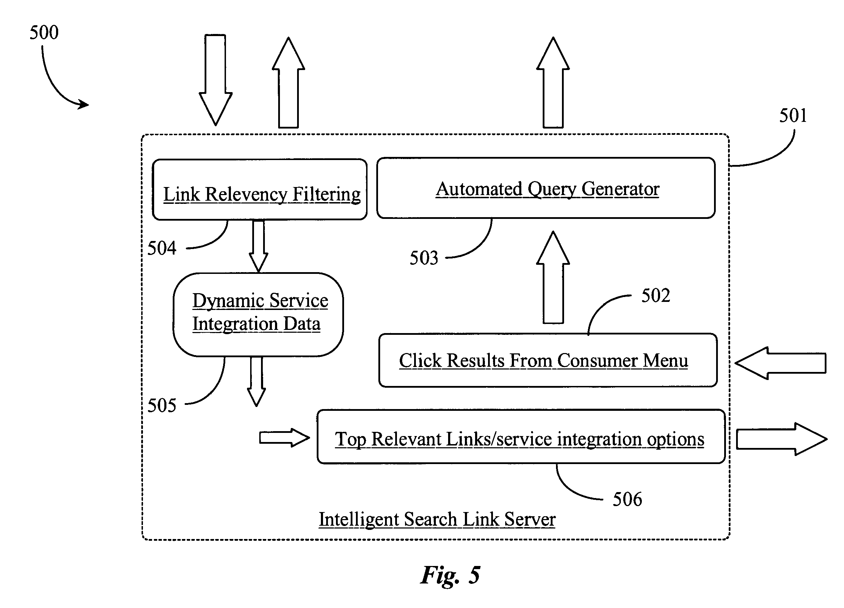

Fig. 5 is a block diagram 500 illustrating intelligent search link server functions according to an embodiment of the present invention. A server-processing module 501 illustrates processing of both input and results. Module 501 may be construed to incorporate the functions of components 203, 202, and 205 described with reference to Fig. 2.

In practice, click results 502 are received from a consumer's menu interaction. These are interpreted and sent to an automated query generator 503. Generator 503 forms a usable search query for network submission. Such a query may take various forms and may be transferred using a variety of protocols without departing from the spirit and scope of the present invention. XML-based queries may be used in some cases where XML communication over simple object application protocol (SOAP) is supported. Simple text queries may also be constructed that emulate user typed input. There are many possibilities.

The third party provider returns results in the form of hyperlinks, which may undergo link relevancy filtering. Link relevancy filtering may occur both at the search provider node and within module 501 without departing from the spirit and scope of the present invention. In addition to link provision, a third party service may also provide service subscription information for enabling a consumer to subscribe to services through the prevalent programming provider functioning as a service broker. This data is illustrated herein as dynamic service integration data 505. This additional data may be provided as XML-based instruction data that may be incorporated with a link into a menu option. For example, highlighting an option, which may include service information, may cause the service information to display. Simple option selection using the enter button may also display pay-per-view information telling the consumer how to integrate the Web programming into his or her service package.

A sever application 506 delivers the top relevant links and any associated service integration data to the consumer menu. In one embodiment, a sample media selection may be provided along with subscription information including how to add the channel or service to existing program options. This in effect may allow consumers to flexibly configure their own program menus to always show available or subscribed Web-service options. Therefore, externally sourced media channels may be discovered and then added to existing program channel options such as through reservation of certain channel slots and then populating those slots with the Web-channel hyperlink and description data. Further, program scheduling associated with the content offerings available through an integrated Web channel may be incorporated into normal theme or schedule guides that list individual programs and scheduled times for viewing.

Web-based services formerly restricted to PC-based viewing audiences may now compete for television-based viewing audiences through the content search capability of the present invention thereby increasing viewer membership and revenue. Likewise, cable and satellite service providers may increase revenue by brokering subscriptions to Web-based services through dynamic subscription packages that may be changed by consumers through addition of Web-based media channels and pay-per-view content. Instead of , or in addition to providing a typical Web access requiring a key board and mouse function, program providers may provide integration options for including Web-content in with regularly offered programs and channels eliminating much navigation work and extra peripheral hardware required to disseminate normal Web content.

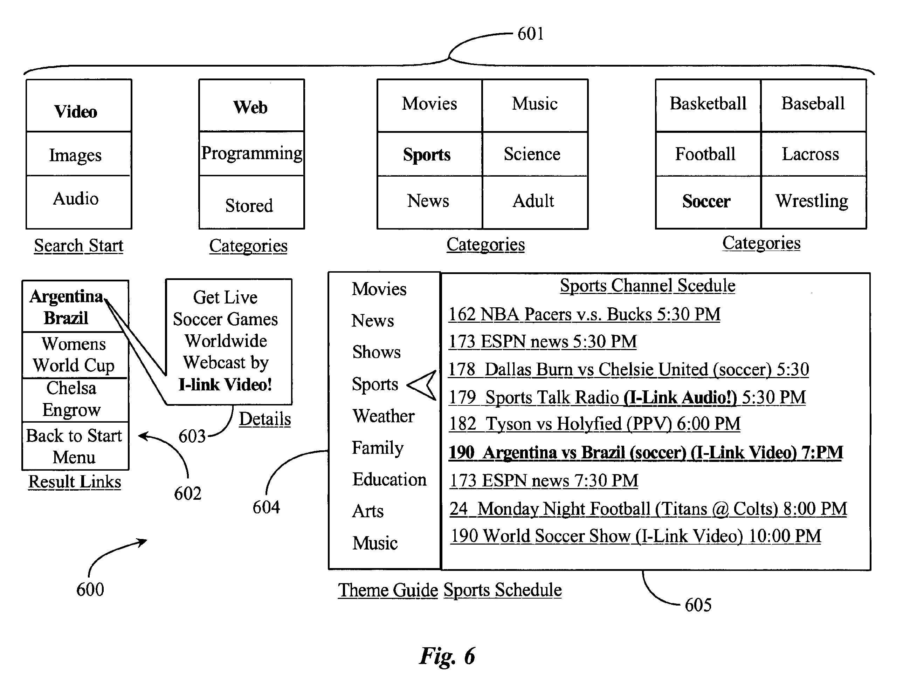

Fig. 6 is a block diagram 600 illustrating smart link population into a remote program menu according to an embodiment of the present invention. Diagram 600 illustrates how a content search may result in dynamic program modification to include Web-based content. A content search interaction 601 begins with a start menu defining the broad categories of video, images, and audio as was previously described before. Consumer selection of video brings up a next category group defining Web, programming, and stored. In this example, a consumer may isolate the search to Web content, programming content already available through his or her service, or to media content the consumer may have already stored locally.

Consumer selection of Web brings up a next category of options including movies, sports, news, music, science, and adult. These broad categories may be provided statically every time a consumer selects Web. These then may be the only available categories for Web searching. By selecting sports, the consumer orders a next category including the options basketball, football, soccer, baseball, lacrosse, and wrestling. At this point the aggregation of selections in this interaction inform the system that it is looking for video; constrained to Web videos; constrained to sports videos; constrained to soccer videos. No local searching or searching at the service intermediary is required because of the specific constraint of Web. Therefore, a query to search the Web for soccer videos is submitted to an appropriate third party service or services.

After the results are received, filtered, and optimized, a result category 602 may be dynamically inserted into the consumer's menu guide that may include the top most relevant hits, in this case, Argentina vs. Brazil (soccer game; Americas), Women's World Cup (soccer game International), and Chelsa vs. United (soccer game; European). An additional option cancels the search and takes the consumer back to the start menu.

The consumer highlights or selects Argentina vs. Brazil. In this instance, the selection brings up service information 603 informing the consumer that his or her selection is associated with a Web-based service provider (I-Link Video), which has a media channel that provides international live soccer programming. By selecting the item again, additional information may be revealed like subscription information including pricing. Selecting the item a third time might confirm purchase of the programming and may automatically add the programming as a channel in a menu guide or theme guide 604.

Theme guide 604 lists all available programming categories that are selectable to view the current times that programs may be viewed. Selecting the category sports reveals the current channels, programs and schedules. Sports schedule 605 includes the just-added Web content on channel 190 showing Argentina vs. Brazil and identifying I-Link Video as the content source. The viewing start time for the soccer game Argentina vs. Brazil is 7:00 PM. Future soccer programming times and program definitions are automatically integrated into the sports schedule now that the consumer has added the content by selecting and confirming the purchase. For example, channel 190 shows a program World Soccer Show airing at 10:00 PM immediately after Argentina vs. Brazil. It is noted also that channel 179 has been reserved for an audio sports programming, Sports Talk Radio, also provided by I-Link. Other available programs include the regular cable or satellite programming channels. Navigation then through the normal scheduling guide enables one touch selection and viewing of the Web-based content.

The methods and apparatus of the present invention may be applied to cable and satellite programming services having connection ability to larger wide-area-networks including the Internet network. A variety of ISLS implementations may be deployed without departing from the spirit and scope of the present invention, including client, intermediary, and source location application components.

In one embodiment, electronic information pages may also be optionally displayed resulting from consumer highlight and selection of a searched hyperlink. Optionally, scrolling and information page navigation can be achieved using remote control function, or keyboard input may be activated to enable browsing. In preferred application the methods and apparatus of the invention provide an efficient and simple way to access and consume Web-sourced media content including video channels and audio channels using only the directional buttons and select buttons on the remote.

The following features, separately or in any combination, may also constitute advantageous embodiments of the described or claimed invention:
- The claimed and/or described system wherein the provider information regarding service integration is provided with returned results;
- The claimed and/or described method wherein in step (a), selection is performed using scroll and enter indicia of a remote control device;
- The claimed and/or described method wherein in step (b), each subsequent category more narrowly defines content selected;
- The claimed and/or described method wherein in step (g), optimizing includes filtering results to eliminate duplicate hyperlinks;
- The claimed and/or described method wherein in step (h), the results include additional information about service subscription to the provider of the content;
- The claimed and/or described system wherein the results are universal resource locators invoke able to stream or download content;
- A filtering application for optimizing universal resource locators returned from a search engine comprising: a first portion for eliminating duplicate universal resource locators that point to a same content resource; a second portion for eliminating universal resource locators that are not relevant to a certain degree to search subject matter; and a third portion for appending network path information to the universal resource locators to enable invocation of the links for initiating streaming of or download and display of the associated content;
- The claimed and/or described filtering application used in a proxy content search operation initiated from a cable or satellite television terminal using a remote control device;
- The claimed and/or described filtering application
wherein the portion of the network path appended to a universal resource locator is derived manually by viewing source code data associated with the information page containing the final path to the stored content;
- The claimed and/or described filtering application
wherein the final path information is appended by automated process based on knowledge of the store location of the content.

The present invention, in light of the many embodiments possible, should be afforded the broadest possible interpretation under examination. The present invention is limited only by the following claims.

## Claims

1. A system for conducting a data search operation for content stored at nodes on a network, comprising:
a menu interface for enabling an interaction sequence of content category selection and definition-narrowing of those categories selected;
a server application for interpreting the interaction sequence and for formulating a search query based on the interpretation; and
a session application for submitting the query to a third party node, and for receiving and filtering results returned, the results forwarded to the menu interface for subsequent display and interaction.

2. The system of claim 1 wherein the content searched includes video, audio, or image content.

3. The system of claim 1 wherein the terminal is a cable television or a set-top box, the menu controlled via a remote control device.

4. The system of claim 1 wherein the third party node is a link server hosted by a network data search engine and service provider.

5. The system of claim 1 wherein the third party node is a content server hosted by a content service provider.

6. A method for searching a network for content including steps for:
(a) in an interactive content menu accessible from a terminal, selecting a content category categories offered;
(b) repeating content category selection one or more times from subsequent content menu screens resulting from previous selections;
(d) formulating a search query based on data describing the content selection sequence;
(e) submitting the search query to one or more search engines;
(f) receiving results from the one or more search engines;
(g) optimizing the received results against a set of rules; and
(h) forwarding the optimized results to the television terminal for display and further interaction in a subsequent menu screen.

7. The method of claim 6 wherein in step (d), the query is formed according to rules associated with third party criteria for query execution in a search engine.

8. The method of claim 6 wherein in step (f), the one or more search engines return results in the form of hyperlinks.

9. The method of claim 6 wherein in step (f), at least one of the search engines is local to the terminal and searches local stores for selected content.

10. The method of claim 6 wherein in step (g), optimizing includes completing the URL path to the content rendering the URL invoke able to initiate content streaming or download and display.
